Europäisches Patentamt

(19) European Patent Office

Office européen des brevets

(11) Veröffentlichungsnummer: **0 222 367**
B1

(12) # EUROPÄISCHE PATENTSCHRIFT

(45) Veröffentlichungstag der Patentschrift:
20.12.89

(51) Int. Cl.⁴: **B29C 43/22**, B29C 43/24

(21) Anmeldenummer: 86115627.1

(22) Anmeldetag: 11.11.86

(54) **Kalander zur Verarbeitung von thermoplastischen Kunststoffen.**

(30) Priorität: 14.11.85 AT 3316/85

(43) Veröffentlichungstag der Anmeldung:
20.05.87 Patentblatt 87/21

(45) Bekanntmachung des Hinweises auf die Patenterteilung:
20.12.89 Patentblatt 89/51

(84) Benannte Vertragsstaaten:
BE CH DE ES FR GB GR IT LI LU NL SE

(56) Entgegenhaltungen:
DE-A- 2 639 447
US-A- 2 651 076
US-A- 3 154 008

(73) Patentinhaber: Senoplast Klepsch & Co., Nr. 511,
A-5710 Kaprun(AT)

(72) Erfinder: Klepsch, Wilhelm, Dipl.-Ing.,
Rosbachstrasse 563, A-5710 Kaprun(AT)
Erfinder: Plöbst, Dietmar, Häusfeldsiedlung 670,
A-5710 Kaprun(AT)

(74) Vertreter: Hofinger, Engelbert et al, Torggler-Hofinger
Wilhelm-Greil-Strasse 16, A-6020 Innsbruck(AT)

ACTORUM AG

## Beschreibung

Die Erfindung betrifft einen Kalander zur Verarbeitung von thermoplastischen Kunststoffen zu Materialbahnen, insbesondere zu Barrierefolien für die Lebensmittelverpackung, unter Verwendung von vorzugsweise gekühlten Kalanderwalzen, wobei der Achsabstand eines Einlaufwalzenpaares verstellbar ist und eine der beiden Einlaufwalzen in einem Unterrahmen und die andere in einem Oberrahmen angeordnet ist, der relativ zum Unterrahmen verstellbar ist. Mit einer derartigen Einrichtung wird die insbesondere aus einer Breitschlitzdüse kommende thermoplastische Masse bevorzugt unter Kühlung zu Materialbahnen gewalzt. Die Zahl und Anordnung weiterer Kalanderwalzen richtet sich dabei nach produktabhängigen Kriterien, die natürlich unter anderem auch den Einlaufwalzenspalt bestimmen. Derartige Kalander sind beispielsweise den DE-A 20 06 680, 26 39 447, der DE-B-22 01 630 oder der FR-A-1 569 613 zu entnehmen.

Ein besonderes Problem liegt dabei darin, daß der Dickenbereich der erzeugbaren Materialbahnen eine untere Grenze von etwa 600 µm nicht unterschreiten kann, wenn die Kalanderwalzen auch Materialbahnen bis zu 12 mm und mehr verarbeiten sollen. Es ist ein allgemein bekanntes Problem, besonders dünne Folien in gleichmäßiger Dicke zu erzeugen, und hiezu sind eigens Einrichtungen entwickelt worden.

Die Erfindung hat es sich nun zur Aufgabe gestellt, einen Kalander der eingangs genannten Art zu schaffen, mittels dem Materialbahnen zumindest in einem Dickenbereich von 100 µm bis 12 mm herstellbar sind.

Erfindungsgemäß wird dies nun dadurch gelöst, daß der Oberrahmen eine Glättleiste aufweist, wobei der Einlaufwalze des Unterrahmens in zwei verschiedenen Betriebsstellungen entweder die obere Einlaufwalze oder die Glättleiste zugeordnet ist.

Durch die wahlweise Kombination der Einlaufwalze des Unterrahmens mit der Einlaufwalze des Oberrahmens oder der Glättleiste lassen sich gemäß der gestellten Aufgabe Materialbahnen zumindest von einem Dickenbereich um 100 µm bis 12 mm herstellen. Dabei erfolgt die Fertigung der Materialbahnen mit einer Dicke von etwa 600 µm bis 12 mm in üblicher Weise durch die Verwendung des Einlaufwalzenpaares, während die besonders dünnen Materialbahnen zwischen 100 µm und 600 µm durch die Zuordnung der Glättleiste zur Einlaufwalze des Unterrahmens erzeugbar sind. Dabei steht der jeweils nicht verwendete Anpreßteil des Oberrahmens in einer Ruheposition.

In einer ersten Ausführung ist vorgesehen, daß der Oberrahmen einen Schlitten aufweist, der in einer Gleitführung des Unterrahmens verschiebbar ist. Hierdurch wird eine besonders einfache Verstellung zwischen den beiden Betriebsstellungen erzielt. Diese Umrüstung wird dabei wesentlich erleichtert, wenn die Gleitführung auf dem Unterrahmen um eine zu seiner Einlaufwalze parallele Achse schwenkbar ist.

In einer weiteren Ausführung ist vorgesehen, daß im Oberrahmen eine zweite Kalanderwalze um eine parallele Achse schwenkbar gelagert ist. Demzufolge ist die Betriebsstellung, in der das Einlaufwalzenpaar eingesetzt wird, für die Durchführung der Materialbahn durch die Walzen des Oberrahmens etwa im gesamten Dickenbereich zwischen 600 µm bis 12 mm geeignet.

Eine weitere Ausführung, die den unmittelbaren Anschluß des Kalanders an die Extrusionsdüse erlaubt, sieht vor, daß die Glättleiste an einem Pendelrahmen schwenkbar aufgehängt ist. Dadurch kann die Glättleiste in der Betriebsstellung des Einlaufwalzenpaares, in der sie In Richtung der Extrusionsdüse zu verschieben ist, aus dem Materialbahnniveau entfernt werden.

Bevorzugt ist die Glättleiste mit einer Luftaustrittsdüse versehen und kann auf dem Pendelrahmen höhenverstellbar angeordnet sein, wodurch in Anpassung an die Materialbahndicke eine Anpressung an die Einlaufwalze des Unterrahmens ausschließlich durch die von einem Gebläse durch die Düse ausgeblasene Luft erfolgt, sodaß der Anpreßdruck besonders leicht einstellbar ist und wesentlich kleiner als bei einem Walzenpaar gewählt werden kann. Die aus der Düse austretende Luft dient dabei gleichzeitig auch zur Kühlung der Materialbahn.

Im Unterrahmen sind bevorzugt im Anschluß an die Einlaufwalze mehrere Kalanderwalzen vorgesehen, sodaß auch in der Betriebsstellung des Einlaufwalzenpaares eine nochmalige Wahlmöglichkeit besteht, indem die Materialbahn durch die Walzen des Oberrahmens oder durch die Walzen des Unterrahmens geführt wird. Dabei kann in beiden Walzensätzen jede Walze einzeln mittels eines thyristorgesteuerten Gleichstromgetriebemotors angetrieben werden. Hiezu können zwei Antriebsmöglichkeiten vorgesehen sein: Im Synchronlauf wird eine vom Leitantrieb (Einlaufwalze des Unterrahmens) vorgegebene Antriebsgeschwindigkeit synchron auf die Folgeantriebe übertragen. Wenn sich die Antriebsgeschwindigkeit am Leitantrieb ändert, so ändern sich auch die Geschwindigkeiten der Folgeantriebe in der gleichen Größe. Bei Einzellauf wird, wie beim Synchronlauf, eine Antriebsgeschwindigkeit vorgegeben. Zusätzlich läßt sich die Antriebsgeschwindigkeit jeder Chromwalze über ein Potentiometer einzeln abändern, um Materialschrumpfungen auszugleichen. In jedem der beiden Regelungszustände kann man einzelne Walzen zu- und abschalten.

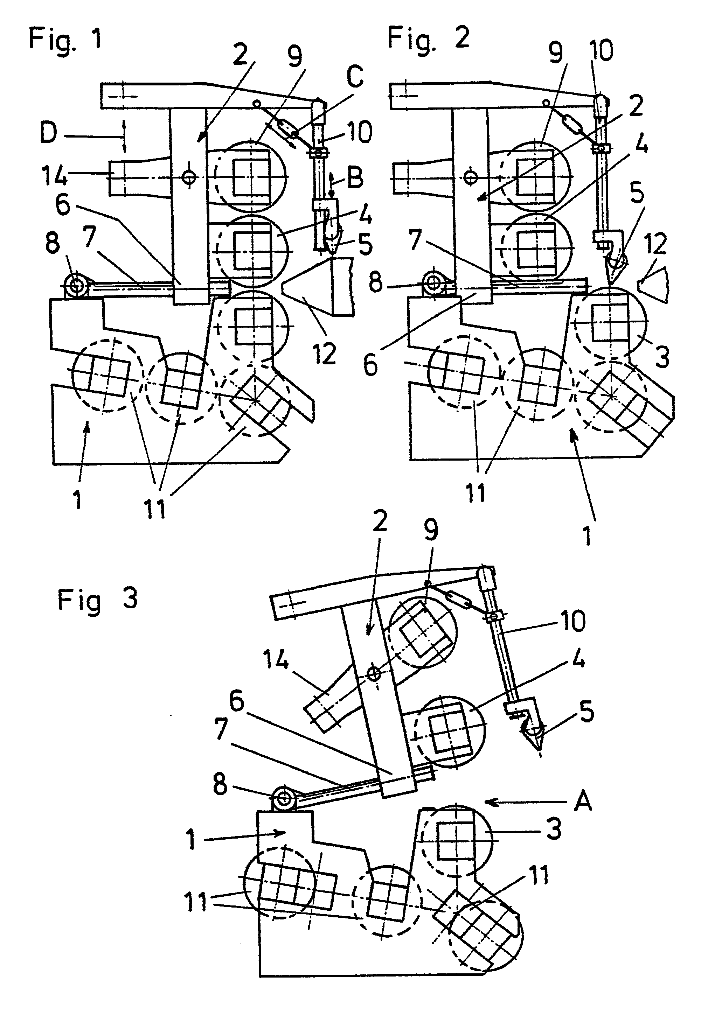

Die Fig. 1 - 3 zeigen schematische Ansichten des erfindungsgemäßen Kalanders in der ersten Betriebsstellung als Walzwerk (Fig. 1), in der zweiten Betriebsstellung als Glättwerk (Fig. 2) und in einer geöffneten Übergangsstellung (Fig. 3) zur Darstellung der Verstellbarkeit des Kalanders.

Ein erfindungsgemäßer Kalander weist einen Unterrahmen 1 und einen Oberrahmen 2 auf, dessen Auflagebereich als Schlitten 6 ausgebildet ist. An der Oberseite des Unterrahmens 1 ist eine Gleitführung 7 vorgesehen, die um eine Achse 8 hochschiebbar ist.

Im Unterrahmen 1 sind eine Einlaufwalze 3 und dieser nachgeschaltet mehrere gekühlte Kalanderwalzen 11 vorgesehen. Der Einlaufwalze 3 zugeordnet ist auch im Oberrahmen 2 eine Einlaufwalze 4 angeordnet, an die sich eine weitere Kalanderwalze 9 anschließt. Einlaufrichtungsseitig ist am Oberrahmen 2 ein Pendelrahmen 10 angelenkt, der am unteren Ende eine Glättleiste 5 trägt. Sowohl die Glättleiste 5 als auch der Pendelrahmen 10 sind mittels geeigneter Verstelleinrichtungen in Richtung der in Fig. 1 gezeigten Doppelpfeile B, C bewegbar. Die Kalanderwalze 9 des Oberrahmens 2 ist in Armen 14 gelagert, die in Richtung des Doppelpfeiles D verschwenkbar sind.

In der von Fig. 1 gezeigten Betriebsstellung für die Produktion von Materialbahnen mit einer Dicke zwischen 600 μm und mindestens 12 mm ist im Nahbereich eine Breitschlitzdüse 12 des Extruders angeordnet. Der Oberrahmen 1 ist auf der Gleitführung 7 in seine in der Zeichnung rechte Endstellung verschoben, in der die Achsen der Walzen 9, 4 des Oberrahmens und der Einlaufwalze 3 des Unterrahmens 1 in einer Ebene liegen. Die am Pendelrahmen 10 angeordnete Glättleiste 5 ist dabei in eine obere Stellung angehoben, sodaß sie oberhalb der Breitschlitzdüse 12 in einer Ruheposition Platz findet. In dieser Betriebsstellung läßt der Kalander dabei noch die Möglichkeit offen, die Materialbahn über die beiden Walzen des Oberrahmens 2 oder über die einzelnen zuschaltbaren Walzen des Unterrahmens 1 zu führen. Wie aus Fig 3 ersichtlich, sind einzelne Kalanderwalzen 11 im Unterrahmen 1 verstellbar gelagert, ebenso auch die Kalanderwalze 9 des Oberrahmens 2, die auf den Armen 14 angeordnet ist.

Für die Herstellung von sehr dünnen Materialbahnen, etwa in einer Dicke zwischen 100 μm und 600 μm, ist die Verwendung als übliches Kalanderwalzwerk gemäß Fig. 1 nicht möglich. Hiezu wird die Einrichtung in die in Fig. 2 gezeigte Position bebracht, wobei der gesamte Oberrahmen 2 auf der Gleitführung 7 nach links verschoben wird. Anschließend wird die Glättleiste 5 abgesenkt und der Pendelrahmen 10 sowie die Glättleiste 5 selbst in die erforderliche Winkellage verschwenkt. Da die Glättleiste 5 bevorzugt eine Luftaustrittsdüse erhält, der von einem Gebläse Luft zugeführt wird, kann die durch die Luft erfolgende Anpressung und Glättung der aus der benachbarten Breitschlitzdüse 12 austretenden Materialbahn (Pfeil A) sehr fein reguliert werden. Gleichzeitig kühlt die austretende Luft auch das Material, sodaß die nachfolgende Umschlingung zumindest der Einlaufwalze 3 des Unterrahmens 1 keine Störungen und Schwierigkeiten verursacht.

Von besonderer Bedeutung ist die Erfindung für die Herstellung von Barrierefolien. Solche Folien bestehen aus mehreren Schichten thermoplastischer Kunststoffe, wobei die Deckschichten beispielsweise Polystyrol (PS), Polyäthylen (PE), Polypropylen (PP) und Ethylvinylalkohol (EVOH) sein können. Eine Schicht der Folie dient dazu, um eine Barriere zu bilden. So verhindert beispielsweise PE den Austritt von Wasserdampf und damit das Austrocknen des Inhalts etwa von Joghurtbechern. EVOH bildet eine Barriere für Sauerstoff, welcher somit nicht zum verpackten Gut durchdringen und dieses chemisch verändern kann. Dicke und Zusammensetzung von Barriere folien variieren je nach dem Anwendungszweck sehr stark, wobei aus Qualitätsgründen der Einsatz von Kalandern bei der Herstellung erwünscht ist, soferne die Dicke der Folien dies überhaupt zuläßt. Gerade bei der Herstellung von Barrierefolien wird man somit von der durch die Erfindung geschaffenen Möglichkeit Gebrauch machen, ohne große Umrüstungen immer dann Kalander einzusetzen, wo dies möglich ist, und bei Unterschreitung der hiefür notwendigen Mindestdicke der Folien ausschließlich die Gleitleiste einzusetzen.

## Patentansprüche

1. Kalander zur Verarbeitung von thermoplastischen Kunststoffen zu Materialbahnen, insebesondere zu Barrierefolien für die Lebensmittelverpackung, unter Verwendung von vorzugsweise gekühlten Kalanderwalzen, wobei der Achsabstand eines Einlaufwalzenpaares verstellbar ist und eine der beiden Einlaufwalzen in einem Unterrahmen und die andere in einem Oberrahmen angeordnet ist, der relativ zum Unterrahmen verstellbar ist, dadurch gekennzeichnet, daß der Oberrahmen (2) eine Glättleiste (5) aufweist, wobei der Einlaufwalze (3) des Unterrahmens (1) in zwei verschiedenen Betriebsstellungen entweder die obere Einlaufwalze (4) oder die Glättleiste (5) zugeordnet ist.

2. Kalander nach Anspruch 1, dadurch gekennzeichnet, daß der Oberrahmen (2) einen Schlitten (6) aufweist, der in einer Gleitführung (7) des Unterrahmens (1) verschiebbar ist.

3. Kalander nach Anspruch 1, dadurch gekennzeichnet, daß die Gleitführung (7) auf dem Unterrahmen (1) um eine zu seiner Einlaufwalze (3) parallele Achse (8) schwenkbar ist.

4. Kalander nach einem der Ansprüche 1 bis 3, dadurch gekennzeichnet, daß im Oberrahmen (2) eine zweite Kalanderwalze (9) um eine parallele Achse schwenkbar gelagert ist.

5. Kalander nach einem der Ansprüche 1 bis 4, dadurch gekennzeichnet, daß die Glättleiste (5) an einem Pendelrahmen (10) schwenkbar aufgehängt ist.

6. Kalander nach Anspruch 1 oder 5, dadurch gekennzeichnet, daß die Glättleiste (5) eine Luftaustrittsdüse aufweist.

7. Kalander nach Anspruch 5 oder 6, dadurch gekennzeichnet, daß die Glättleiste (5) höhenverstellbar auf dem Penelrahmen (10) angeordnet ist.

## Claims

1. A calender for processing thermoplastic materials to form webs of material, in particular barrier foils for packaging foodstuffs, using preferably cooled calender rollers, wherein the distance between the centres of a pair of entry rollers is adjustable and one of the two entry roller is arranged in a bottom frame and the other is arranged in a top frame which is adjustable relative to the bottom frame characterised in that the top frame (2) has a smoothing bar (5), wherein either the upper entry roller (4) or the smoothing bar (5) is associated with the entry roller (3) of the bottom frame (1) in two different operating positions.

2. A calender according to claim 1 characterised in that the top frame (2) has a carriage (6) which is displaceable in a sliding guide (7) of the bottom frame (1).

3. A calender according to claim 1 characterised in that the sliding guide (7) is pivotable on the bottom frame (1) about an axis (8) which is parallel to its entry roller (3).

4. A calender according to one of claims 1 to 3 characterised in that a second calender roller (9) is mounted in the top frame (2) pivotably about a parallel axis.

5. A calender according to one of claims 1 to 4 characterised in that the smoothing bar (5) is suspended pivotably on a swinging frame (10).

6. A calender according to claim 1 or claim 5 characterised in that the smoothing bar (5) has an air outlet nozzle.

7. A calender according to claim 5 or claim 6 characterised in that the smoothing bar (5) is arranged on the swinging frame (10) adjustably in respect of height.

**Revendications**

1. Calandre de traitement de matières plastiques thermoplastiques pour obtenir des bandes de matériau, en particulier des feuilles de barrières pour l'emballage de produits alimentaires, utilisant des rouleaux de calandre de préférence refroidis, l'entraxe d'une paire de rouleaux d'entrée étant réglable et l'un des deux rouleaux d'entrée étant disposé dans un cadre inférieur et l'autre des deux rouleaux étant disposé dans un cadre supérieur qui est réglable par rapport au cadre inférieur, caractérisée en ce que le cadre supérieur (2) présente une bande à lisser (5) et, soit le rouleau d'entrée supérieur (4), soit la bande à lisser (5) est associée au rouleau d'entrée (3) du cadre inférieur (1), en deux positions de fonctionnement différentes.

2. Calandre selon la revendication 1, caractérisée en ce que le cadre supérieur (2) présente un coulisseau (6) susceptible d'être déplacé dans un guidage glissant (7) du cadre inférieur (1).

3. Calandre selon la revendication 1, caractérisée en ce que le guidage glissant (7) disposé sur le cadre inférieur (1) est pivotant autour d'un axe (8) parallèle à son rouleau d'entrée (3).

4. Calandre selon l'une des revendications 1 à 3, caractérisée en ce qu'un second rouleau de calandre (9) monté pivotant autour d'un axe parallèle est disposé dans le cadre supérieur (2).

5. Calandre selon l'une des revendications 1 à 4, caractérisée en ce que la bande à lisser (5) est suspendue pivotante sur un cadre pendulaire (10).

6. Calandre selon la revendication 1 ou 5, caractérisée en ce que la bande à lisser (5) présente une buse de sortie d'air.

7. Calandre selon la revendication 5 ou 6, caractérisée en ce que la bande à lisser (5) est disposée réglable en hauteur sur le cadre pendulaire (10).

Fig. 1

Fig. 2

Fig 3